# EUROPÄISCHE PATENTSCHRIFT

(11) **EP 0 915 129 B1**
(45) Veröffentlichungstag und Bekanntmachung des Hinweises auf die Patenterteilung: **26.06.2013**
(21) Anmeldenummer: 98121047.9
(22) Anmeldetag: 06.11.1998
(51) Int. Cl.: C08K 3/00, F16C 33/16, C10M 103/02

(54) **Gleitkörper, enthaltend Zn-Phosphat**
Sliding member containing Zn-phosphate
Corps de glissement contenant du phosphate de zinc

(30) Priorität: 11.11.1997 DE 19749785
(43) Veröffentlichungstag der Anmeldung: 12.05.1999
(73) Patentinhaber: SGL Carbon SE, 65201 Wiesbaden (DE)
(72) Erfinder: Vesper, Wolfgang, Dr. Dipl.-Chem., 53115 Bonn (DE); Wislsperger, Ulrich, Dipl.-Ing., 53175 Bonn (DE)

(56) Entgegenhaltungen:
- EP-A- 0 328 514
- EP-A- 0 456 471
- EP-A- 0 471 329
- DATABASE WPI Section Ch, Week 9426 Derwent Publications Ltd., London, GB; Class L02, AN 94-211016 XP002096185 & JP 06 145679 A (HITACHI CHEM CO LTD) , 27. Mai 1994

## Beschreibung

Die Erfindung betrifft einen aus mindestens einem Kohlenstoffüllstoff und einem Kunstharzbinder bestehenden Gleitwerkstoffkörper.

Gleitkörper werden überall dort eingesetzt, wo sich mindestens zwei Maschinen- oder Geräteteile mit der technischen Aufgabe, einen möglichst geringen Reibungswiderstand zu erreichen, unter einer gewissen Andruckkraft berühren und relativ zueinander bewegen. Bei solchen Bewegungen soll der an den Reibflächen entstehende Abrieb sowie die dort entwickelte Reibungswärme ein Minimum erreichen. Beispiele für derartige Anwendungen sind Trenn - oder Drehschieber in Pumpen und Verdichtern, Gleitlager, Gleitringdichtungen oder Bürsten und Schleifstücke für die Übertragung elektrischer Ströme. Wo eine ausreichende Schmierung der sich relativ zueinander bewegenden Teile gewährleistet ist, bereitet die Auswahl geeigneter Werkstoffe für die aneinander gleitenden Teile keine Schwierigkeiten. Sehr häufig treten jedoch Betriebszustände auf, bei denen wie beim Anfahren oder Auslaufen von Maschinen eine ausreichende Schmierung zeitlich begrenzt fehlt oder bei denen völlig ohne Schmierung gearbeitet werden muß und Trockenlauf vorliegt.

Für diese Anwendungsfälle werden Gleitkörper eingesetzt, die Substanzen mit einer eigenen Schmierfähigkeit wie Graphit oder Molybdänsulfid, enthalten. Allerdings reicht die Schmierfähigkeit der meisten dieser "Trockenschmierstoffe" in befriedigendem Maße nur soweit wie sich noch ein dünner Feuchtigkeitsfilm, der beispielsweise auf den Feuchtigkeitsgehalt der umgebenden Atmosphäre zurückgeht, aufbauen kann. Wenn wie beim Arbeiten in sehr trockener Luft, in stark getrockneten Medien, unter Vakuum, in großen Höhen oder bei hohen Temperaturen auch dies nicht mehr gegeben ist, genügen auch die vorgenannten, eine Eigenschmierwirkung aufweisenden Stoffe den Anforderungen nicht mehr und es sind weitere Maßnahmen erforderlich.

Das Dokument EP 0 456 471 A2 beschreibt eine Fluorharz-Komposition als Gleitbestandteil in Lagern oder Schanieren umfassend ein Fluorharz, mindestens einen Füllstoff ausgewählt aus Glasfasern, Glaspulvern, Carbonfasern und Carbonpulvern sowie einem Phosphat relativ zum Gesamtgewicht der Komposition. Die hervorragende Hitzebeständigkeit, chemische Resistenz und der geringe Reibungskoeffizient verbunden mit den selbstschmierenden Eigenschaften von Fluorharzen sollen in Gleitanwendungen genutzt werden. Nachteil von Fluorharzen in diesen Anwendungen ist jedoch die einfache Deformation (Kriechneigung) bei hohen Belastungen oder hohen Temperaturen. Durch den Zusatz von Füllstoffen und Phosphaten soll die Kriechneigung vermindert und damit die Deformationsstabilität bei hohen Belastungen und Temperaturen verbessert werden. Damit die vorteilhaften Eigenschaften zum Tragen kommen, soll der Gesamtgehalt von Füllstoffen und Phosphaten 40,1 Gew.-% nicht übersteigen. Weiterhin wird insbesondere für die Nutzung in Lagern, Nocken, Getrieben, Gleitplatten, Gleitrohren von flexiblen Wellen und dergleichen ein metallischer Träger eingesetzt, der mit 0,05 bis 1,0 mm dicken Schichten des Fluorharz-Komposits beschichtet ist.

Aus dem Stand der Technik ist bekannt, in diesen Fällen poröse Gleitkörper mit Kunstharzen wie Phenol- oder Furanharzen, Polyäthylen, Polyestern, Polyacrylatharzen, per- oder teilfluorierten organischen Polymeren oder auch mit anorganischen Verbindungen wie Salzen oder Gläsern zu imprägnieren. Siehe z.B. Robert Paxton "Manufactured Carbon: A Self-Lubricating Material for Mechanical Devices", CRC Press Inc., Florida 1979. Von den anorganischen Verbindungen werden Phosphate und Borverbindungen bevorzugt eingesetzt. Das Imprägnieren der Gleitkörper oder deren Vorproduktkörper mit den meist salzartigen oder oxidischen Substanzen geschieht mittels Lösungen oder, bei Vorliegen einer entsprechend temperaturbeständigen Bindermatrix, mittels Schmelzen durch einfaches Tränken oder durch Anwendung des Vakuum-Druckverfahrens. Häufig schließt sich an die Imprägnierung noch eine thermische Behandlung an, um die imprägnierten Substanzen zu trocknen oder durch Einbrennen in glasartige Strukturen zu überführen. Das für die Wirkung als Trockenschmierstoff vorteilhafte hygroskopische Verhalten der salzartigen oder oxidischen Trockenschmierstoffe wirkt sich in anderer Hinsicht jedoch negativ aus. Einerseits können sie dadurch zwar als Feuchtigkeitsreservoire für die Schmierung wirken, andererseits nehmen sie bereits in normal feuchter Atmosphäre so viel Feuchtigkeit auf, daß sie stark quellen, was zu ihrem teilweisen Austreten aus den Poren der Gleitwerkstoffkörper, verbunden mit Störungen an den Laufflächen oder zum Aufbau von mechanischen Spannungen im Porensystem der Körper führt. Diesen Schwierigkeiten ist man dadurch begegnet, daß man das nach dem Trocknen oder Einbrennen der salzartigen oder oxidischen Substanzen entstandene restliche Porenvolumen mit einem Kunstharz gefüllt oder die Poren gleich mit einer Mischung aus einem Kunstharz und der anorganischen Verbindung imprägniert hat. So ist beispielsweise aus der DE-B 965 670 bekannt, einen porösen, aus Kohlenstoff bestehenden Körper, der für die Verwendung als selbstschmierendes Kohlenstofflager bestimmt ist, mit einer wässerigen Lösung von Borsäure oder borsauren Salzen zu imprägnieren und die Körper nach einer anschließenden Trocknung mit beim Erhitzen ein hartes, hitzebeständiges Harz bildenden Stoffen, vorzugsweise mit Furanharzen zu imprägnieren. Nach einer anderen Variante wird die entsprechende Borverbindung in Mischung mit dem Kunstharz beim Imprägnieren direkt in das Porensystem eingebracht.

Gemäß US-A 2,909,452 wird das Porensystem poröser Kohlenstoffkörper für Kontaktbürsten für elektrische Motoren teilweise mit einer Füllung von Natriumpyrophosphat und dann mit einer vollständigen Füllung aus einem Polyesterharz versehen. Durch US-A 4,119,572 wird offenbart, daß zum gleichen Zwecke Kohlenstoff-Graphitmaterial für elektrische Bürsten zuerst mit Lösungen imprägniert werden, aus denen im Porensystem polymere Phosphate, insbesondere Phosphate des Zinks und des Mangans entstehen und daß die so eingelagerten Phosphate danach mit einem filmbildenden Harz versiegelt werden. Einer Zink- oder Aluminiumphosphatimprägnierung mit nachfolgender Imprägnierung mit einem flüssigen wärmehärtbaren Polymeren bedient man sich in der EP-A2 0 471 329, um Elektrographitkörper für die Anwendung als Dreh- bzw. Trennschieber für Rotationspumpen und Kompressoren oder als Gleitringe unter extremen Trockenlaufbedingungen geeignet zu machen.

Bei allen vorgenannten Verfahren wird zuerst ein poröser, vorzugsweiser ganz aus Kohlenstoff bestehender Grundkörper hergestellt und dieser dann in mehreren nachgeschalteten Schritten - Imprägnieren plus Trocknen und/oder Einbrennen und in den meisten Fällen noch zusätzlich Imprägnieren mit Kunstharz und Aushärten des Kunstharzes - zu einem gebrauchstauglichen Gleitwerkstoffkörper verarbeitet. Nachteilig an diesen Gleitwerkstoffkörpern ist ihre aufwendige Herstellung und die Tatsache, daß sich die die Gleiteigenschaften verbessernden Zusätze ausschließlich in den Poren des jeweiligen Ausgangs- oder Grundkörpers befinden und zwischen den Poren sozusagen Gleitstoffdiskontinua vorliegen. Bezüglich der Verwendung als Trenn - oder Drehschieber liegt ein weiterer Nachteil in der vergleichsweise großen Bruchanfälligkeit dieser sprödkeramischen Teile.

Wegen dieser Nachteile hat man versucht, weniger spröde Gleitwerkstoffe zu entwickeln, die preiswerter herstellbar sind. Das Ergebnis waren mit Kohlenstoff oder Graphit gefüllte, kunstharzgebundene Gleitwerkstoffkörper, die zwar wesentlich weniger aufwendig herstellbar und erheblich weniger bruchanfällig sind, die jedoch bezüglich ihrer Lauf- und Verschleißeigenschaften hinter den keramisch aufgebauten Gleitwerkstoffkörpern zurückbleiben.

Die dieser Patentanmeldung zugrundeliegende Erfindung hatte deshalb die Aufgabe, die Gleit- und Verschleißeigenschaften von mindestens einen Kohlenstoffüller enthaltenden, kunstharzgebundenen Gleitwerkstoffkörpern zu verbessern und Verfahren anzugeben, nach denen die verbesserten Gleitwerkstoffkörper mit ähnlich geringem Aufwand wie die bekannten Gleitwerkstoffkörper hergestellt werden können.

Der erste Teil der Aufgabe wird mit den Merkmalen des kennzeichnenden Teils des Patentanspruchs 1, und der zweite Teil der Aufgabe mit den Merkmalen der kennzeichnenden Teile der Patentansprüche 9 und 28 gelöst.

Ein erfindungsgemäßer, aus mindestens einem Kohlenstoff-füllstoff und einem Kunstharzbinder bestehender Gleitwerkstoffkörper ist dadurch gekennzeichnet, daß er ein Phosphat enthält und der Kunstharzanteil maximal 40 Gew.-% beträgt, wobei der Gleitwerkstoffkörpereinen Binder aus der Gruppe Phenolharz, Furanharze, Epoxidharze, Phenylsulfitharze, Cyanatester enthält. Nach einer bevorzugten Ausführungsform ist das Phosphat in ihm wie ein Füllstoff in Form feiner bis feinster Teilchen zusammen mit den anderen, aus Kohlenstoff bestehenden Füllstoffen sowie gegebenenfalls weiteren phosphatfreien, nicht aus Kohlenstoff bestehenden Füllstoffen des Körpers gleichmäßig über den ganzen Körper verteilt und wie diese in die Bindemittelmatrix eingebunden.

Ein Verfahren zur Herstellung eines solchen Körpers ist dadurch charakterisiert, daß mindestens ein aus Kohlenstoff bestehender Füllstoff und mindestens ein Metallphosphat sowie gegebenenfalls ein weiterer, phosphatfreier, die Laufeigenschaften beeinflussender, nicht aus Kohlenstoff bestehender Füllstoff gemäß vorgegebener Rezeptur ohne Zugabe eines Bindemittels bis zum Erreichen einer gleichmäßigen Verteilung der Komponenten gemischt werden, sodann die Trockengutmischung mit einem Kunstharzbindemittel gemischt wird und dann das so erhaltene Mischgut mittels eines Verdichtungsprozesses bei 160 bis 200 °C zu einem Formkörper verarbeitet wird, wobei der Binder aus der Gruppe Phenolharze, Furanharze, Epoxidharze, Polyphenylensulfidharze, Cyanatesterharze ausgewählt wird.

Ein anderes Verfahren zum Herstellen elnes erfindungsgemäßen Körpers ist dadurch gekennzeichnet, daß mindestens ein aus Kohlenstoff bestehender Füllstoff, mindestens ein Metallphosphat sowie gegebenenfalls ein weiterer, phosphatfreier, die Laufeigenschaften beeinflussender, nicht aus Kohlenstoff bestehender Füllstoff und ein Bindemittel aus Kunstharz gemäß vorgegebener Rezeptur miteinander bis zum Erreichen einer gleichmäßigen Verteilung der Komponenten gemischt werden, und dann das so erhaltene Mischgut mittels einer Formgebungseinrichtung zu einem Formkörper verarbeitet wird.

Für die erfindungsgemäße Verwendung sind Metallphosphate geeignet, die in Form feiner Pulver hergestellt oder auf mechanischem Wege in eine fein pulverisierte Form gebracht werden können. Es können Pulver mit mittleren Korngrößen d_{50%} von 200 µm bis zu feinsten Stäuben verwendet werden. Die Forderung nach einer möglichst gleichmäßigen Verteilung des Gleithilfsstoffes Phosphat im Gleitkörper kann naturgemäß mit entsprechend feinen Pulvern gut erfüllt werden. Deshalb werden bevorzugt Pulver mit Korngrößen im Bereich von d_{50%} = 30µm, d_{90%} = 100µm und d_{50%} = 5 µm, d_{90%} = 15 µm und besonders bevorzugt von d_{50%} = 7 µm, d_{90%} = 30 µm verwendet.

Aus der Vielzahl der Salze von Phosphorsäuren kommen die thermisch bis zu mindestens 300°C stabilen, kristallwasserfreien Phosphate als erfindungsgemäße Stoffe für den direkten Zusatz in Frage. Es sind dies tertiäre Orthophosphate wie z.B. K₃PO₄ oder AlPO₄, quartäre Salze der Diphosphorsäure wie beispielsweise Na₄P₂O₇ oder Mn₂P₂O₇, ring- und kettenförmige Polyphosphate und Ultraphosphate. Es können aber auch alle die Hydrogenphosphate oder Kristallwasser enthaltenden Phosphate, die beim Erhitzen in Phosphate der vorgenannten Gruppe von thermisch stabilen Phosphaten (wasserfreie Orthophosphate bis Ultraphosphate) übergehen, verwendet werden. Nach einer Variante der Erfindung kann man den Kohlenstoffüller zusammen mit einem solchen Hydrogenphosphat oder mit einem Kristallwasser enthaltenden Phosphat bei einer so hohen Temperatur mischen, daß die eingesetzten, thermisch nicht stabilen Phosphate in die entsprechenden thermisch stabilen Phosphate umgewandelt werden. Beispielsweise gehen bei einer solchen Behandlung die sekundären Phosphate (HPO₄)²⁻ unter Freisetzung von Wasser in Di- oder Pyrophosphate (P₂O₇)⁴⁻ über.

Die so erhaltene Trockengutmischung kann nach dem Abkühlen, das gegebenenfalls unter Ausschluß von Feuchtigkeit erfolgt, mit dem Binderharz und eventuell anderen Zusätzen gemischt und die Mischung dann zu Gleitstoffkörpern geformt werden. Statt eines Phosphates können auch Mischungen von zwei oder mehreren Phosphaten Verwendung finden. In der Praxis werden bevorzugt quartäre Salze der Di- oder Pyrophosphorsäure wie beispielsweise Na₄P₂O₇ und besonders bevorzugt Zinkpyrophosphat Zn₂P₂O₇ verwendet.

Der Gehalt an den thermisch stabilen Phosphaten in der aus Füllern, Binder und Phosphat(en) bestehenden Mischung liegt im Bereich von 1 bis 25 Gewichtsprozent, bevorzugt im Bereich von 3 bis 9 und besonders bevorzugt im Bereich von 5 bis 8 Gewichtsprozent.

Als Kohlenstoffüller enthalten die Gleitwerkstoffkörper mindestens einen der folgenden Stoffe: Synthetisch hergestellter Graphit wie z.B. Elektrographit, Lonzagraphit, Kishgraphit, Naturgraphit sowie Petrol-, Steinkohlenteerpech- oder Rußkoks, wobei die drei letztgenannten Stoffe vorzugsweise in graphitierter Form verwendet werden. Die genannten Kohlenstoffüller, graphitische und nicht graphitierte Formen eingeschlossen, können allein oder in Mischungen enthalten sein. Gemeinsames Merkmal von ihnen ist, daß sie feinkörnig bis staubförmig sind, d.h., daß ihr Maximalkorn nicht über 3 mm liegt. Die einzelnen Kornfraktionen einer Rezeptur können jedoch eine jeweils unterschiedliche und auf bestimmte Zwecke angepaßte Feinheit und Kornverteilung haben.

Zusätzlich zu einem der vorgenannten Kohlenstoffüller oder zu einer der Kohlenstoffüllermischungen kann der Körper noch weitere, dem Fachmann an sich bekannte, die Laufeigenschaften des Gleitwerkstoffkörpers beeinflussende Füllstoffe wie beispielsweise Siliciumdioxid, Siliciumcarbid, Aluminiumoxid, Talkum, Magnesiumoxid enthalten. Diese Stoffe weisen entweder selbst eine gewisse Gleitfähigkeit auf oder sie wirken in begrenztem Maße abrasiv und dienen beim Betrieb der Gleitwerkstoffkörper der Reinigung der Laufflächen von unerwünschten Filmen, die sich aus dem Materialabrieb der Gegenlaufwerkstoffe, gegebenenfalls im Zusammenwirken mit aus der Umgebungsatmosphäre aufgenommenen Stoffen gebildet haben.

Sämtliche Füllstoffe, nämlich Phosphat(e), Kohlenstoffüller und nicht aus Kohlenstoff bestehende Füller, sind im Gleitwerkstoffkörper an ihren Oberflächen mit einem Harzbinder überzogen und der Harzbinder bildet auch die Matrix, die die Kornzwischenräume im Gleitwerkstoffkörper im wesentlichen porenfrei ausfüllt. Die maximale Verwendungstemperatur der erfindungsgemäßen Gleitwerkstoffkörper ist deshalb durch die obere Verwendungsgrenztemperatur für die eingesetzten Harze bestimmt. Als Binder werden Kunstharze wie Phenol-, Furan-, Epoxid-, Polyester- oder Cyanatesterharze, verwendet. Für die Anwendungen der Gleitwerkstofförper unter normalen Betriebsbedingungen werden heute wegen ihres günstigen Preis-Leistunggverhältnisses bevorzugt Phenol- und/oder Furanharze eingesetzt. Besonders bevorzugt sind Phenolharze des Novolak-Typs, denen zum Aushärten Formaldehyd abspaltende Substanzen wie z.B. Hexamethylentetramin zugesetzt werden. Die Verwendung von Naturharzen oder modifizierten Naturharzen als Bindemittel ist möglich, doch sind die Kunstharze besser an die jeweiligen Anforderungen anpaßbar und werden deshalb überwiegend verwendet. Der Anteil an Matrix-, bzw. Binderharz im Gleitwerkstoffkörper liegt im Bereich von 30 bis 40 Gew.-%.

Das Herstellen von erfindungsgemäßen Gleitwerkstoffkörpern geschieht durch Mischen der Trockengutkomponenten mit dem Binderharz, Herstellen eines für ein Formgeben geeigneten Granulats oder Pulvers aus dem gemischten Gut, was vorzugsweise durch Zerkleinern und Klassieren geschieht, Formgeben durch Warmpressen in Gesenk- oder isostatischen Pressen, Extrudieren mittels beispielsweise Strangpressen, Spritzpressen oder Spritzgießen und gegebenenfalls Tempern der erhaltenen Formlinge, um das Binderharz vollends auszuhärten.

Die Verwirklichung dieses generellen Verfahrensganges kann im wesentlichen nach zwei Varianten geschehen.

Beim Arbeiten nach der ersten Variante wird mindestens ein aus Kohlenstoff bestehender Füllstoff, gegebenenfalls mindestens ein nicht aus Kohlenstoff bestehender Füllstoff und mindestens ein Metallphosphat gemäß vorgegebener Rezeptur miteinander ohne Zugabe eines Bindemittels bis zum Erreichen einer gleichmäßigen Verteilung der Komponenten gemischt, sodann die Trockengutmischung mit einem Kunstharzbindemittel gemischt und dann das so erhaltene Mischgut nach einer der im Vorstehenden oder Nachstehenden beschriebenen Verfahrensweisen zu einem Formkörper verarbeitet.

Beim Arbeiten nach der zweiten Variante wird mindestens ein aus Kohlenstoff bestehender Füllstoff, gegebenenfalls mindestens ein nicht aus Kohlenstoff bestehender Füllstoff und mindestens ein Metallphosphat und ein Bindemittel aus Kunstharz gemäß vorgegebener Rezeptur miteinander bis zum Erreichen einer gleichmäßigen Verteilung der Komponenten gemischt und dann das so erhaltene Mischgut nach einer der im Vorstehenden oder Nachstehenden beschriebenen Verfahrensweisen unter Zuhilfenahme einer Formgebungseinrichtung zu einem Formkörper verarbeitet.

Als Komponenten für das Zusammensetzen der Mischungen, nämlich die aus Kohlenstoff bestehenden Füllstoffe, die gegebenenfalls zuzusetzenden, nicht aus Kohlenstoff bestehenden Füllstoffe, die Metallphosphate und der jeweilige Harzbinder, werden bei den Verfahren zum Herstellen der Gleitwerkstoffkörper die im vorstehenden bei der Beschreibung der Zusammensetzung der Gleitwerkstoffkörper aufgeführten Stoffe gemäß den jeweiligen Rezepturvorgaben und in Anpassung an die jeweiligen Anwendungserfordernisse verwendet.

Bei der Durchführung der Verfahren kann das Binderharz den Feststoffkomponenten entweder in Pulverform oder in pastöser, flüssiger, gelöster oder in Form einer Aufschlämmung zugegeben und dann zusammen mit den Feststoffanteilen weiterverarbeitet werden. Das Binderharz kann mit den Trockengutkomponenten außer bei Raumtemperatur auch bei einer Temperatur vermischt werden, die oberhalb des Schmelzbereichs oder der Glasübergangstemperatur des jeweils verwendeten Harzes oder der jeweils verwendeten Harzmischung liegt.

Im folgenden werden einige bevorzugte Verfahrensvarianten für die Herstellung von erfindungsgemäßen Gleitwerkstoffkörpern beschrieben.

Nach einer ersten bevorzugten Variante können die Trockengutkomponenten Kohlenstoffüllstoff, gegebenenfalls nicht aus Kohlenstoff bestehender Füller, der Phosphatfüller und das Binderharz in Pulverform in einem ersten Verfahrensschritt in einem Mischer bis zum Erreichen einer gleichmäßigen Verteilung der Komponenten gemischt werden. Sodann wird das Mischgut in einem beheizten Mischaggregat, das eine hohe Knetwirkung hat, z.B. einem Walzenmischwerk oder Kalander, bei einer Temperatur, die oberhalb des Erweichungsbereichs des Binderharzes liegt, gemischt und dabei das Binderharz aufgeschmolzen. Das heiße Mischgut wird in Form einer Bahn oder eines Fells ausgetragen und nach dem Abkühlen gebrochen und gemahlen. Letzteres kann beispielsweise auf einer Stift- oder einer Zahnscheibenmühle geschehen. Das Mahlaggregat wird dazu vorteilhafterweise so eingestellt, daß beim Zerkleinern und nachfolgendem Sieben ein Mahl- und Siebgut mit folgender Kornzusammensetzung erhalten wird: 40 bis 60 % 1 bis 2 mm, bis zu 30 % größer 2 mm und bis zu 30 % größer 600 µm bis 1 mm. Der Feinanteil von kleiner oder gleich 600 µm wird beim Sieben abgetrennt und dem Knetprozeß wieder zugeführt. Dieses Mahlgut wird durch Spritzgießen oder Spritzpressen zu Formlingen verpreßt. Die so erhaltenen Formlinge werden dann noch bei Temperaturen von 160°C bis 250°C zum Vernetzen des Binders getempert, um entweder erfindungsgemäße Gleitwerkstoffkörper oder Vorproduktkörper zu ergeben, aus denen durch mechanisches Bearbeiten Gleitwerkstoffkörper hergestellt werden können.

Das nach dem Zerkleinerungsschritt erhaltene Mahlgut kann gemäß einer Untervariante des Verfahrens durch Mahlen weiter zerkleinert werden, bis eine Feinheit von d_{50%} ungefähr 40 *µ*m erreicht ist oder es wird nach dem Mahlen durch Klassieren eine Kornfraktion dieser Feinheit erzeugt. Diese Feinkornfraktion wird sodann in einer Gesenkpresse mit einer heizbaren Matrize oder einer zum Warmverpressen geeigneten isostatischen Presse unter einem solchen Temperaturprogramm zu Formkörpern verpreßt, bei dem der Harzbinder zunächst schmilzt, dann aber aushärtet. Vorzugsweise wird hierbei bei Temperaturen von 160 bis 200°C gearbeitet. Falls erforderlich, müssen die so erhaltenen Formkörper nach dem Entformen zum vollständigen Aushärten des Binderharzes noch getempert werden.

Nach einer zweiten bevorzugten Variante werden den gemäß Rezeptur in einem Mischer zusammengeschütteten Ausgangsstoffen, nämlich Kohlenstoffüller, gegebenenfalls nicht aus Kohlenstoff bestehender Hilfsstoffüller, Phosphat und Binderharz, bezogen auf die Gesamtheit der vorgelegten Komponenten, 5 bis 20 Gewichtsprozent eines Lösungsmittels, das den Harzbinder zu lösen vermag, zugesetzt. Bei Verwendung von Phenolharzen werden dazu vorzugsweise ca. 10 Gew.-% Äthanol verwendet. Die Mischung wird sodann zunächst bis zum Erreichen ausreichender Homogenität, gegebenenfalls unter leichtem Erwärmen gemischt. Dabei wird die flüssigkeitszugängliche Oberfläche aller Feststoffteilchen mit einer dünnen Schicht der Binderharzlösung überzogen. Danach wird unter weiterem Mischen durch Erhöhen der Temperatur im Mischgut das Lösungsmittel so weit abgedampft, bis die Mischung aufbricht und als schollige bis granulierte Masse vorliegt. Nach dem Austragen aus dem Mischer wird die Masse, gegebenenfalls nach einem Zerkleinerungsschritt, klassiert. Die körnigen Anteile, d.h. die Anteile mit Korngrößen über 0,6 mm werden durch Spritzgießen oder Spritzpressen und die verbliebenen Feinanteile durch Warmpressen zu Formkörpern verarbeitet, die, um zu fertigen Gleitwerkstoffkörpern zu kommen, gegebenenfalls noch zum Endvernetzen des Binderharzes getempert werden müssen.

Nach einer dritten bevorzugten Variante des Verfahrens werden alle Mischungskomponenten, einschließlich des fein pulverisierten Binders in einem Mischer bei Raumtemperatur trocken bis zur vollständigen Vergleichmäßigung der Mischung gemischt. Nach dem Austragen wird das Pulver in der Matrize einer Gesenkpresse oder in einer anderen geeigneten Preßeinrichtung bei Raumtemperatur zu einem Vorpreßling verpreßt. Dieser Vorpreßling wird danach in die heizbare Preßform einer Gesenkpresse oder in den Formbehälter einer geheizten isostatischen Presse überführt und dort bei einer Temperatur, bei der das Binderharz flüssig vorliegt, zu einem Formkörper verpreßt. Danach werden die erhaltenen Formkörper zum vollständigen Vernetzen des Harzbinders noch bei Temperaturen von 130 bis 250 °C nachgetempert. Wenn die Formkörper beim Warmpressen jedoch lange genug in der geheizten Preßform verbleiben können, kann das Nachtempern entfallen.

Im folgenden wird die Erfindung anhand von Ausführungsbeispielen weiter erläutert:

In allen Ausführungsbeispielen war Zinkpyrophosphat, Zn₂O₂O₇, der Firma Chemische Fabrik Budenheim in 55257 Budenheim, Deutschland, der zugesetzte Phosphatfüllstoff. Er wurde in einer Kornfeinheit von d_{50%} = 7*µm*, d_{99%} = 32*µm* eingesetzt.

### Beispiel 1:

Es wurden 58,5 Gew.-Teile Naturgraphit von einer Körnung d_{50%} = 20 *µ*m, 6,5 Gew.-Teile Zinkpyrophosphat von einer Körnung d_{50%} = 7 *µ*m, d_{99%} = 32 *µ*m, und als Bindemittel 35 Gew.-Teile eines Phenol Novolak/Hexamethylentetramin-Gemisches (Anteil Hexamethylentetramin: 11 Gew.-%) von einer Körnung d_{50%} = 15 *µ*m in einer Menge von insgesamt 15 kg in einem mit einem Zerhacker ausgerüsteten Pflugscharmischer (Hersteller Firma Lödige/Paderborn, Typ FM 50) intensiv gemischt. Das auf diese Weise homogenisierte Trockengut wurde sodann bei Raumtemperatur auf einer Gesenkpresse in einer Matrize (Hersteller Bussmann, Typ HPK 60) unter einem Druck von 20 MPa zu einem Formkörper mit den Abmessungen 150 x 200 x 20 mm³ verpreßt. Nach dem Entnehmen aus der Preßform wurde der so hergestellte Formkörper in eine den Außenabmessungen des Körpers entsprechende Form einer Heißpresse überführt und dort bei einer Temperatur von 180°C unter einem Druck von 20 MPa 25 Minuten lang abermals verpreßt. Bei diesem Vorgang wurde der Binder aufgeschmolzen und weitgehend ausgehärtet. Nach dem Entnehmen aus der Heißpresse wurde der Körper in einen Temperofen überführt und dort zum Nachhärten des Binders 72 Stunden lang bei 180°C nachbehandelt. Nach dem Entnehmen des Körpers aus dem Ofen und dem Abkühlen wurden aus dem Körper nach bekannten mechanischen Bearbeitungsverfahren Trennschieber oder andere Gleitkörper hergestellt.

### Beispiel 2:

33,75 Gew.-Teile Rußkoksgraphit, d_{50%} = 18 *µ*m, 33,75 Gew.-Teile Elektrographit, d₅₀ = 14 *µ*m, 7,5 Gew.-Teile Zinkpyrophosphat, d_{50%} = 7 *µ*m und als Binder 25 Gew.-Teile einer Mischung aus Phenol Novolak mit Hexamethylentetramin (Gehalt an Hexamethylentetramin: 11 Gew.-%), d_{50%} ca. 300 *µ*m, insgesamt 15 kg, wie in Beispiel 1 vorbeschrieben, in einem Pflugschar-Schnellmischer der Firma Lödige innig vermischt. Danach wurde die homogenisierte Trockengutmischung in einen heizbaren Knetmischer der Firma Werner & Pfleiderer (Fassungsvermögen 8 l) überführt, dort mit 10 Gew.-% Äthanol versetzt und bei 40°C 90 Minuten lang geknetet. Das aus dem Mischer ausgetragene Mischgut wurde sodann bei Raumtemperatur an Luft 12 Stunden lang getrocknet und dann auf einer Hammermühle auf eine Kornverteilung von d_{50%} = 40 *µ*m, d_{90%} = 125 *µ*m gemahlen. Das so aufbereitete Mischgut wurde dann wie bereits in Beispiel 1 beschrieben, zuerst auf einer Gesenkpresse (Bussmann, HPK 60) zu einem Vorproduktkörper mit den Abmessungen 150 x 200 x 20 mm² verpreßt und danach der dadurch erhaltene Vorproduktkörper auf einer Heißpresse unter einem Preßdruck von 20 MPa bei 180°C 25 Minuten lang gepreßt, um den Körper weiter zu verdichten und das Binderharz auszuhärten. Aus dem Körper wurden durch mechanische Bearbeitung Gleitkörper und Trennschieber hergestellt.

### Beispiel 3:

29,1 Gew.-Teile Rußkoksgraphit von einer Körnung d_{50%} = 18 *µ*m, 29,1 Gew.-Teile Elektrographit von einer Körnung d_{50%} = 25 *µ*m, 1,1 Gew.-Teile Magnesiumoxid von einer Körnung d_{50%} = 10 *µ*m, 6,9 Gew.-Teile Zinkpyrophosphat von einer Körnung d_{50%} = 7 *µ*m und 33,9 Gew.-Teile einer Mischung aus Novolak/Hexamethylentetramin (Gehalt an Hexamethylentetramin: 11 Gew.-%), d_{50%} = ca. 300 *µ*m, wurden wie in Beispiel 1 in einem Lödige-Schnellmischer bei Raumtemperatur innig vermischt. Das Mischgut wurde sodann 7 Minuten lang auf einem geheizten Walzmischwerk, Hersteller, Fa. Berstorff GmbH, Hannover, Deutschland, plastifiziert. Die Temperatur der Masse betrug dabei anfangs 80°C und am Ende des Vorgangs 130°C. Zur Prüfung auf die spätere Verarbeitbarkeit durch Spritzgießen wurde die plastifizierte Masse sodann in einer Prüfeinrichtung mit einem Preßgesenk mit Bechereinsatz gemäß "Bechertest" nach DIN 53465 geprüft. Die sogenannte Becherschließzeit lag dabei zwischen 5 und 8 Sekunden. Nach dem Erkalten der aus dem Mischer ausgetragenen gewalzten Materialbahn wurde diese zunächst in einem Vorbrecher, beispielsweise einem Walzenbrecher, grob- und dann auf einer dem Vorbrecher nachgeschalteten Zahnscheibenmühle, Hersteller Condux, Deutschland, feinzerkleinert. Nach dem Absieben des Kornanteils von kleiner/gleich 0,6 mm (weniger als 10 Gew.-%) hatte das Kornband folgende Werte: 27 Gew.-% kleiner/gleich 1 mm, 51 Gew.-% 1 bis 2 mm und 22 Gew.-% größer/gleich 2 mm. Für die Erzielung guter Ergebnisse sollte das Kornband in folgenden Bereichen liegen: 10 bis 30 Gew.-% kleiner/gleich 1 mm, 40 bis 60 Gew.-% 1 bis 2 mm und 10 bis 30 Gew.-% größer/gleich 2 mm. Der beim Mahlen und Klassieren angefallene Kornanteil von kleiner als 0,6 mm wurde dem nächsten Ansatz beim Plastifizieren wieder zugesetzt. Das gemahlene und klassierte Gut wurde sodann in einen Homogenisator (Typ Nauta) überführt und dort durch Zugabe von Wasser auf einen Feuchtigkeitsgehalt von 1,5 Gewichtsprozent (Bestimmung nach Mettler: Bestimmung des Gewichtsverlusts nach 20 Minuten Temperaturbehandlung bei 105 °C) eingestellt. Das so befeuchtete körnige Gut wurde sodann auf einer Spritzgießmaschine vom Typ Arburg Allrounder, Typ 270-210--500, unter den folgenden Betriebsbedingungen zu Rohlingen für die Herstellung von Trennschiebern und Gleitkörpern verpreßt:

| | |
|---|---|
| Einspritzdruck | 1300 bar |
| Werkzeug-Temperatur, Düsenseite | 169 °C |
| Zylindertemperatur | 70 °C |

Gemäß den vorstehenden Ausführungsbeispielen 1 bis 3 und nach anderen hier nicht im Detail beschriebenen Rezepturvarianten hergestellte Gleitwerkstoffkörper wurden zu Trennschiebern für 3 verschiedene Vielzellenverdichter endbearbeitet und unter den zu den Tabellen 1 bis 3 jeweils angegebenen Bedingungen getestet. In den Tabellen 1, 2 und 3 sind die Zusammensetzungen und das jeweilige Formgebungsverfahren sowie die Testergebnisse für die verschiedenen Gleitwerkstoffqualitäten wiedergegeben.

**Tabelle 1**

| | | | | | | | | | | | | | |
|---|---|---|---|---|---|---|---|---|---|---|---|---|---|
| Verschleißwerte von Trennschiebern aus kunstharzgebundenem Graphit unterschiedlicher Qualitäten auf einem Vielzellenverdichter der Firma Gebrüder Becker GmbH & Co., Typ T 3.40 unter folgenden Bedingungen: | | | | | | | | | | | | | |
| | | | | | | | | | | | | | |
| Atmosphäre | | | | | | : Trockene Luft | | | | | | | |
| Unterdruck auf der Saugseite | | | | | | : -0,6 bar | | | | | | | |
| Druck auf der Druckseite | | | | | | : 0,6 bar | | | | | | | |
| mittlere Umfangsgeschwindigkeit | | | | | | : 8,9 m/s | | | | | | | |
| Anzahl Trennschieber pro Verdichter | | | | | | : 7 | | | | | | | |
| Abmessungen der Schieber | | | | | | : 95 × 53 × 4 mm | | | | | | | |
| | | | | | | | | | | | | | |

| | Phosphat -füllstoff | Kohlenstoff-Füllstoff Gew.-% | | | Binder Gew-% | sonstige Zusätze | Formgebung | Radialverschleiß (µm/100 Std.) | | | Kolkverschleiß (µm/1000 Std.) | | |
|---|---|---|---|---|---|---|---|---|---|---|---|---|---|
| Nr. | Zn₂P₂0₇ Gew.-% | Naturgraphit | Elektrographite | Rußkoksgraphit | Novolak + Hexa | Gew.-% | | Min | Max | Mittelwert | Min | Max | Mittel -wert |
| 1 | --- | 65,0 | --- | --- | 35,0 | | warmpressen | 132 | 159 | 144 | 27 | 39 | 33 |
| 2 | 6,5 | 58,5 | --- | --- | 35,0 | | warmpressen | 127 | 153 | 143 | 6 | 15 | 10 |
| 3 | --- | --- | 37,5 | 37,5 | 25,0 | | warmpressen | 287 | 317 | 297 | 29 | 43 | 32 |
| 4 | 7,5 | --- | 33.75 | 33,75 | 25,0 | | warmpressen | 127 | 138 | 132 | 10 | 13 | 11 |
| 5 | --- | 15,3 | --- | 60,0 | 24,7 | | warmpressen | 256 | 275 | 265 | 21 | 24 | 23 |
| 6 | 7,5 | 14,0 | --- | 55,7 | 22,8 | | warmpressen | 136 | 144 | 139 | 9 | 12 | 11 |
| 7 | 6,9 | --- | 29,1 | 29,1 | 33,9 | 1.0 Wachs | spritzgießen | 120 | 124 | 122 | 9 | 11 | 10 |
| 8 | 6,9 | --- | 31,1 | 31,1 | 30,0 | 0,9 Wachs | spritzgießen | 102 | 107 | 105 | 8 | 10 | 9 |
| 9 | 6,9 | 31,1 | --- | 31,1 | 30,0 | 0,9 Wachs | warmpressen | 172 | 190 | 181 | 16 | 19 | 17 |
| 10 | --- | 62,0 | --- | --- | 35,0 | 3,0 MoS₂ | warmpressen | 936 | 983 | 959 | 56 | 64 | 61 |

**Tabelle 2**

| | | | | | | | | | | | | | |
|---|---|---|---|---|---|---|---|---|---|---|---|---|---|
| Verschleißwerte von Trennschiebern aus kunstharzgebundenem Graphit unterschiedlicher Qualitäten auf einem Vielzellenverdichter der Firma Gebrüder Becker GmbH & Co., Typ T 3.60 unter folgenden Bedingungen: | | | | | | | | | | | | | |
| | | | | | | | | | | | | | |
| | Atmosphäre | | | | | : Trockene Luft | | | | | | | |
| | Unterdruck auf der Saugseite | | | | | : 0,0 bar | | | | | | | |
| | Druck auf der Druckseite | | | | | : 0,8 bar | | | | | | | |
| | mittlere Umfangsgeschwindigkeit | | | | | : 12 m/s | | | | | | | |
| | Anzahl Trennschieber pro Verdichter | | | | | : 7 | | | | | | | |
| | Abmessungen der Schieber | | | | | : 115 × 50 × 4 mm | | | | | | | |
| | | | | | | | | | | | | | |

| - | Phosphat -füllstoff | Kohlenstoff-Füllstoff Gew.-% | | | Binder Gew.-% | sonstige Zusätze | Formgebung | Radialverschleiß (µm/100 Std.) | | | Kolkverschleiß (µm/1000 Std.) | | |
|---|---|---|---|---|---|---|---|---|---|---|---|---|---|
| Nr. | Zn₂P₂O₇ Gew.-% | Naturgraphit | Elektrographit | Rußkoksgraphit | Novolak + Hexa | Gew-% | - | Min | Max | Mittelwert | Min | Max | Mittelwert |
| 1 | --- | 65 | --- | --- | 35 | --- | warmpressen | 440 | 460 | 451 | 55 | 72 | 63 |
| 11 | 7,8 | 57,2 | --- | --- | 35 | --- | warmpressen | 225 | 236 | 232 | 7 | 11 | 10 |
| 12 | 7,5 | --- | 33,75 | 33,75 | 25 | --- | spritzpressen | 265 | 276 | 270 | 5 | 9 | 7 |
| 4 | 7,5 | --- | 33,75 | 33,75 | 25 | --- | warmpressen | 152 | 157 | 154 | 2 | 6 | 3 |
| 9 | 6,9 | 31,1 | --- | 31,1 | 30 | 0,9 Wachs | warmpressen | 120 | 143 | 127 | 8 | 10 | 9 |

**Tabelle 3**

| | | | | | | | | | | | | | |
|---|---|---|---|---|---|---|---|---|---|---|---|---|---|
| Verschleißwerte von Trennschiebern aus kunstharzgebundenem Graphit unterschiedlicher Qualitäten auf einem Vielzellenverdichter der Firma Gebrüder Becker GmbH & Co., Typ T 25 DS unter folgenden Bedingungen: | | | | | | | | | | | | | |
| | | | | | | | | | | | | | |
| Atmosphäre | | | | | | : Trockene Luft | | | | | | | |
| Unterdruck auf der Saugseite | | | | | | : -0,6 bar | | | | | | | |
| Druck auf der Druckseite | | | | | | : 0,6 bar | | | | | | | |
| mittlere Umfangsgeschwindigkeit | | | | | | : 8,1 m/s | | | | | | | |
| Anzahl Trennschieber pro Verdichter | | | | | | : 8 | | | | | | | |
| Abmessungen der Schieber | | | | | | : 82 × 38 × 4 mm | | | | | | | |
| | | | | | | | | | | | | | |

| - | Phosphat füllstoff | Kohlenstoff-Füllstoff Gew.-% | | | Binder Gew.-% | sonstige Zusätze | Formgebung | Radialverschleiß (µm/100 Std.) | | | Axialverschleiß (µm/1000 Std.) | | |
|---|---|---|---|---|---|---|---|---|---|---|---|---|---|
| Nr. | Zn₂P₂O₇ Gew.-% | Naturgraphit | Elektrographit | Rußkoks -graphit | Novolak + Hexa | Gew-% | - | Min | Max | Mittelwert | Min | Max | Mittelwert |
| 13 | --- | 65 | --- | --- | 35 | --- | warmpressen | 186 | 197 | 192 | 180 | 201 | 190 |
| 14 | 6,5 | 58,5 | --- | --- | 35 | --- | warmpressen | 169 | 187 | 176 | 87 | 120 | 108 |
| 3 | --- | --- | 37,5 | 37,5 | 25 | --- | warmpressen | 135 | 149 | 141 | 127 | 167 | 143 |
| 4 | 7,5 | --- | 33,75 | 33,75 | 25 | --- | Warmpressen | 126 | 143 | 137 | 71 | 86 | 79 |

Der Vergleich der in den Tabellen 1, 2 und 3 wiedergegebenen Werte zeigt eindeutig, daß sich ein Gehalt von Zinkphosphat in kunstharzgebundenen Gleitwerkstoffkörpern günstig auf alle Verschleißarten, Radial- Kolk- und Axialverschleiß auswirkt. Unter Radialverschleiß versteht man hierbei den Materialverlust, der beim Gleiten der radial außen liegenden Stirnfläche des Trennschiebers an der inneren zylindermantelförmigen Wand der Arbeitskammer des Verdichters unter dem radial wirkenden Anpreßdruck des Trennschiebers gegen diese Wand entsteht. Unter dem Radialverschleiß nimmt die Höhe des Trennschiebers ab. Seine Dichtwirkung wird dadurch solange nicht beeinflußt, wie er ausreichenden Halt in seiner auf der Welle befindlichen Führung hat. Kolkverschleiß ist der Abrieb, der beim Hin - und Hergleiten der druckbelasteten Flächen des Trennschiebers in der den Trennschieber haltenden und führenden Ausnehmung auf der exzentrisch im Arbeitsraum des Verdichters angeordneten Welle entsteht. Kolkverschleiß führt durch Dickenabtrag zur Schwächung des Trennschiebers und, bei nicht rechtzeitigem Austausch, schließlich zu dessen Bruch. Unter Axialverschleiß versteht man den Verschleiß, der entsteht, wenn die beiden schmalen Seitenflächen des Trennschiebers an den axial angeordneten Begrenzungsflächen des Arbeitsraumes des Verdichters entlang gleiten. Axialverschleiß führt zu Leckagen zwischen den einzelnen Zellen und damit zu einer Leistungsminderung des Verdichters. Während die Verbesserungen beim Radialverschleiß neben bemerkenswerten Verbesserungen in einigen wenigen Beispielen (Tabelle 1, Nr. 2 und Tabelle 3, Nr. 4) nur gering ausfallen, bzw. innerhalb der Schwankungsbreite liegen, liegen die Verschleißwerte bei den beiden anderen Verschleißarten, Kolkverschleiß und Axialverschleiß, gegenüber den Vergleichsbeispielen um mindestens die Hälfte niedriger. Das bedeutet erheblich längere Standzeiten der Gleitkörper im betrieblichen Einsatz. Die Verbesserungen werden unabhängig von den eingesetzten Kohlenstoff-Füllstoffen, von der Menge zugesetzten Binders, von sonstigen Zusätzen, vom verwendeten Misch- und Aufbereitungsverfahren und vom Formgebungsverfahren erzielt. Überraschend war allerdings, daß eine zu Vergleichszwecken gefertigte Trennschieberqualität mit einem Gehalt von 3 Gew.-% Molybdändisulfid ein katastrophales Verschleißverhalten zeigte. Daraus folgt, daß, bezogen auf die Erfindung, nicht der Zusatz von irgendwelchen als Gleitverbesserer bekannten Substanzen zum gewünschten Erfolg führt, sondern daß es der Auswahl ganz bestimmter Substanzen und deren ganz bestimmter Anwendung bedurfte, um zu den erfindungsgemäßen Verbesserungen zu kommen.

Der Zusatz von Phosphaten wirkt sich jedoch nicht nur positiv auf das Verschleißverhalten von Gleitwerkstoffkörpern, sondern auch, mindestens bei Gleitwerkstoffkörpern mit Phenolharzbindung auf deren Temperaturbeständigkeit und die Biegefestigkeit bei höheren Temperaturen aus. Das bietet Vorteile nicht nur bei der Herstellung der Gleitwerkstoffkörper, sondern auch bei deren Einsatz bei höheren Temperaturen. Siehe Tabelle 4.

**Tabelle 4**

| Biegefestigkeiten von Gleitwerkstoffen in Abhängigkeit von der Temperatur und in Abhängigkeit von der Endbehandlungstemperatur nach dem Formgeben | | | | | | | | | |
|---|---|---|---|---|---|---|---|---|---|
| | | | | | | | | | |

| Nr. | Gehalt an Zn₂P₂O₇ (Gew.-%) | Biegefestigkeit bei °C (MPa) | | | | | | Endbehandlungstemperatur (°C) | Bemerkungen |
|---|---|---|---|---|---|---|---|---|---|
| | | 20°C | 120°C | 140°C | 170°C | 200°C | 230°C | | |
| 1 | --- | 77 | 70 | 67 | 55 | 40 | | 180 | >220°C Blasenbildung |
| 13 | --- | 82 | 71 | 70 | 65 | 44 | 36 | 180 | >200°C Gasentwicklung |
| 14 | 6,5 | 77 | 64 | 65 | 54 | 46 | 35 | 180 | keine Veränderung bei 230°C |
| 14 | 6,5 | 77 | 70 | 67 | 63 | 56 | 48 | 230 | |

Wie aus Tabelle 4 zu ersehen ist, sind Gleitwerkstoffe ohne Phosphatzusatz bei Temperaturen oberhalb 200 °C nicht stabil. Als Zeichen einer Schädigung geben sie Gase ab und bilden Blasen. Gleitwerkstoffe, die mit Phosphatzusatz hergestellt worden waren und deren Binder bei einer Temperatur von nur 180 °C endvernetzt worden war, waren zwar bei 230 °C noch thermisch stabil, hatten aber dort eine geringere Biegefestigkeit als Gleitwerkstoffe gleicher Rezeptur und gleichen Herstellungsganges, die bei 230 °C endbehandelt worden waren.

Die erfinderische Lösung hat folgende Vorteile:
- Es werden Gleitwerkstoffkörper für die Anwendung unter Trockenlaufbedingungen mit erheblich verbesserten Verschleißeigenschaften bereitgestellt.
- Die erfindungsgemäßen Gleitwerkstoffkörper können nach wenig aufwendigen Verfahren hergestellt werden. Das Formgeben ist auch durch Spritzgießen und Spritzpressen möglich.
- Die erfindungsgemäßen Gleitwerkstoffkörper sind warmfester als Gleitwerkstoffkörper ohne Phosphatzusatz. Sie haben größere Warmbiegefestigkeiten.

## Patentansprüche

1. Gleitwerkstoffkörper bestehend aus mindestens einem Kohlenstoffüllstoff und einem Kunstharzbinder, **dadurch gekennzeichnet, daß** er ein Phosphat enthält und der Kunstharzanteil maximal 40 Gewichtsprozent beträgt, wobei der Gleitwerkstoffkörper einen Binder aus der Gruppe Phenolharze, Furanharze, Epoxidharze, Polyphenylensulfidharze, Cyanatesterharze enthält.

2. Gleitwerkstoffkörper nach Patentanspruch 1, **dadurch gekennzeichnet, daß** er ein Phosphat aus der Gruppe Trikaliumphosphat (K₃PO₄), Aluminiumphosphat (AlPO₄), Natriumpyrophosphat (Na₄P₂O₇) und Zinkpyrophosphat (Zn₂P₂O₇) enthält.

3. Gleitwerkstoffkörper gemäß Patentanspruch 2, **dadurch gekennzeichnet, daß** der Gleitwerkstoffkörper Zinkpyrophosphat enthält.

4. Gleitwerkstoffkörper nach Patentanspruch 1, **dadurch gekennzeichnet, daß** er ein Phosphat aus der Gruppe der ring- und kettenförmigen Polyphosphate und Ultraphosphate enthält.

5. Gleitwerkstoffkörper gemäß einem der Patentansprüche 1 bis 4, **dadurch gekennzeichnet, daß** in ihm das Phosphat als Pulver mit Korngrößen im Bereich von d_{50%} = 30 µm, d_{90%} = 100 µm bis d_{50%} = 5 µm, d_{90%} = 15 µm zusammen mit den anderen, ganz oder zum überwiegenden Teil aus Kohlenstoff bestehenden Füllstoffen des Körpers in die Bindemittelmatrix eingebunden ist.

6. Gleitwerkstoffkörper gemäß Patentanspruch 1 oder 5, **dadurch gekennzeichnet, daß** der Gleitwerkstoffkörper als Phosphat ein Salz der Di - oder Pyrophosphorsäure enthält.

7. Gleitwerkstoffkörper gemäß einem der Patentansprüche 1 bis 6, **dadurch gekennzeichnet, daß** der Gleitwerkstoffkörper Kohlenstoffüller aus der Gruppe synthetisch hergestellter Graphit, Naturgraphit, Petrolkoks in graphitierter und nicht graphitierter Form, Steinkohlenteerpechkoks in graphitierter und nicht graphitierter Form, Rußkoks in graphitierter und nicht graphitierter Form enthält.

8. Gleitwerkstoffkörper gemäß einem der Patentansprüche 1 bis 7, **dadurch gekennzeichnet, daß** der Gleitwerkstoffkörper zusätzlich zu mindestens einem Kohlenstoffüller mindestens einen nicht aus Kohlenstoff bestehenden Füllstoff aus der Gruppe Siliciumdioxid, Siliciumcarbid, Aluminiumoxid, Talk, Magnesiumoxid enthält.

9. Verfahren zum Herstellen eines aus mindestens einem Kohlenstoffoller und mindestens einem Kunstharzbinder bestehenden Gleitwerkstoffkörpers, **dadurch gekennzeichnet, daß** mindestens ein aus Kohlenstoff bestehender Füllstoff und mindestens ein Metallphosphat in körniger oder pulveriger Form mit Korngrößen im Bereich von d_{50%} = 30 µm, d_{90%} = 100 µm bis d_{50%} = 5 µm, d_{90%} = 15 µm gemäß vorgegebener Rezeptur miteinander ohne Zugabe eines Bindemittels gemischt werden, sodann die Trockengutmischung mit einem Kunstharzbindemittel gemischt wird und dann das so erhaltene Mischgut mittels eines Verdichtungsprozesses bei 160 bis 200 °C zu einem Formkörper verarbeitet wird, wobei der Binder aus der Gruppe Phenolharze, Furanharze, Epoxidharze, Polyphenylensulfidharze, Cyanatesterharze ausgewählt wird.

10. Verfahren zum Herstellen eines Gleitwerkstoffkörpers nach Patentanspruch 9, **dadurch gekennzeichnet, daß** beim Mischen der Komponenten als Metallphosphat ein Di- oder Pyrophosphat zugesetzt wird.

11. Verfahren zum Herstellen eines Gleitwerkstoffkörpers nach Patentanspruch 10, **dadurch gekennzeichnet, daß** beim Mischen der Komponenten als Metallphosphat Zinkpyrophosphat zugesetzt wird.

12. Verfahren nach Patentanspruch 9, **dadurch gekennzeichnet, daß** mindestens ein Hydrogenphosphat oder ein Kristallwasser enthaltendes Phosphat in körniger oder pulveriger Form bei einer Temperatur, bei der die eingesetzten Phosphate in thermisch stabile Phosphate umgewandelt werden, zugesetzt wird.

13. Verfahren zum Herstellen eines Gleitwerkstoffkörpers nach einem der Patentansprüche 9 bis 12, **dadurch gekennzeichnet, daß** das Bindemittel in Pulverform zugesetzt wird.

14. Verfahren zum Herstellen eines Gleitwerkstoffkörpers gemäß einem der Patentansprüche 9 bis 12, **dadurch gekennzeichnet, daß** das Bindemittel in pastöser, flüssiger, gelöster oder aufgeschlämmter Form zugesetzt wird.

15. Verfahren zum Herstellen eines Gleitwerkstoffkörpers gemäß einem oder mehreren der Patentansprüche 9 bis 14, **dadurch gekennzeichnet, daß** das Vermischen des Bindemittels mit dem Trockengut bei einer Temperatur erfolgt, die oberhalb des Schmelzbereichs des als Bindemittel verwendeten Kunstharzes liegt.

16. Verfahren zum Herstellen eines Gleitwerkstoffkörpers gemäß einem oder mehreren der Patentansprüche 9 bis 15, **dadurch gekennzeichnet, daß** das nach dem Mischen der Feststoffkomponenten und des Harzbinders erhaltene Mischgut vor dem Formgeben zerkleinert und klassiert wird.

17. Verfahren zum Herstellen eines Gleitwerkstoffkörpers gemäß einem oder mehreren der Patentansprüche 9 bis 16, **dadurch gekennzeichnet, daß** das Mischgut durch Warmpressen bei Temperaturen zu Formkörpern verarbeitet wird, die oberhalb des Erweichungsbereichs bzw. der Glastemperatur und unterhalb der Zersetzungstemperatur des als Binder verwendeten Kunstharzes liegt.

18. Verfahren zum Herstellen eines Gleitwerkstoffkörpers gemäß einem oder mehreren der Patentansprüche 9 bis 16, **dadurch gekennzeichnet, daß** das Mischgut durch Spritzgießen oder Spritzpressen zu Formkörpern verarbeitet wird.

19. Verfahren zum Herstellen eines Gleitwerkstoffkörpers gemäß einem oder mehreren der Patentansprüche 9 bis 18, **dadurch gekennzeichnet, daß** als Füllstoffe bei der Herstellung der Trockengutmischung mindestens ein aus Kohlenstoff bestehender Füllstoff, mindestens ein nicht aus Kohlenstoff bestehender Füllstoff und mindestens ein Phosphat verwendet werden.

20. Verfahren zum Herstellen eines aus mindestens einem Kohlenstoffüller und einem Kunstharzbinder bestehenden Gleitwerkstoffkörpers,**dadurch gekennzeichnet, daß** mindestens ein aus Kohlenstoff bestehender Füllstoff, mindestens ein Metallphosphat in körniger oder pulveriger Form mit Korngrößen im Bereich von d_{50%}= 30 µm, d_{90%} = 100 µm bis d_{50%} = 5 µm, d_{90%} = 15 µm und mindestens ein Bindemittel aus der Gruppe Phenolharze, Furanharze, Epoxidharze, Polyphenylensulfidharze, Cyanatesterharze, wobei der Kunstharzanteil maximal 40 Gewichtsprozent beträgt, miteinander gemischt werden, und dann das so erhaltene Mischgut mittels einer Formgebungseinrichtung bei 160 bis 200 °C zu einem Formkörper verarbeitet wird.

21. Verfahren nach Patentanspruch 20, **dadurch gekennzeichnet, daß** mindestens ein aus Kohlenstoff bestehender Füllstoff, mindestens ein Metallphosphat aus der Gruppe Trikaliumphosphat (K₃PO₄), Aluminiumphosphat (AlPO₄), Natriumpyrophosphat (Na₄P₂O₇) und Zinkpyrophosphat (Zn₂P₂O₇) in körniger oder pulveriger Form und mindestens ein Bindemittel aus der Gruppe Phenolharze, Furanharze, Epoxidharze, Polyphenylensulfidharze, Cyanatesterharze gemischt werden, und dann das so erhaltene Mischgut mittels einer Formgebungseinrichtung bei 160 bis 200 °C zu einem Formkörper verarbeitet wird.

22. Verfahren zum Herstellen eines Gleitwerkstoffkörpers nach Patentanspruch 21, **dadurch gekennzeichnet, daß** beim Mischen der Komponenten als Metallphosphat Zinkpyrophosphat zugesetzt wird.

23. Verfahren nach Patentanspruch 20, **dadurch gekennzeichnet, daß** mindestens ein aus Kohlenstoff bestehender Füllstoff, mindestens ein Metallphosphat aus der Gruppe der ring- und kettenförmigen Polyphosphate und Ultraphosphate in körniger oder pulveriger Form und mindestens ein Bindemittel aus der Gruppe Phenolharze, Furanharze, Epoxidharze, Polyphenylensulfidharze, Cyanatesterharze miteinander gemischt werden, und dann das so erhaltene Mischgut mittels einer Formgebungseinrichtung bei 160 bis 200 °C zu einem Formkörper verarbeitet wird.

24. Verfahren zum Herstellen eines Gleitwerkstoffkörpers nach einem der Patentansprüche 20 bis 23, **dadurch gekennzeichnet, daß** das Bindemittel in Pulverform zugesetzt wird.

25. Verfahren zum Herstellen eines Gleitwerkstoffkörpers nach einem der Patentansprüche 20 bis 23, **dadurch gekennzeichnet, daß** das Bindemittel in flüssiger Form zugesetzt wird.

26. Verfahren zum Herstellen eines Gleitwerkstoffkörpers gemäß einem oder mehreren der Patentansprüche 20 bis 25, **dadurch gekennzeichnet, daß** das nach dem Mischen der Feststoffkomponenten und des Harzbinders erhaltene Mischgut vor dem Formgeben zerkleinert und klassiert wird.

27. Verfahren zum Herstellen eines Gleitwerkstoffkörpers gemäß einem oder mehreren der Patentansprüche 20 bis 26, **dadurch gekennzeichnet, daß** das Mischgut durch Warmpressen bei Temperaturen zu Formkörpern verarbeitet wird, die oberhalb des Erweichungsbereichs, bzw. der Glastemperatur und unterhalb der Zersetzungstemperatur des als Binder verwendeten Kunstharzes liegt.

28. Verfahren zum Herstellen eines Gleitwerkstoffkörpers gemäß einem oder mehreren der Patentansprüche 20 bis 27, **dadurch gekennzeichnet, daß** das Mischgut durch Spritzgießen oder Spritzpressen zu Formkörpern verarbeitet wird.

## Claims

1. Anti-friction material element composed of at least one carbon filler and one synthetic resin binder, **characterized in that** it comprises a phosphate and the synthetic resin content is at most 40 percent by weight, where the anti-friction material element comprises a binder from the group of phenolic resins, furan resins, epoxy resins, polyphenylene sulphide resins, cyanate ester resins.

2. Anti-friction material element according to Patent Claim 1, **characterized in that** it comprises a phosphate from the group of tripotassium phosphate (K₃PO₄), aluminium phosphate (AlPO₄), sodium pyrophosphate (Na₄P₂O₇) and zinc pyrophosphate (Zn₂P₂O₇).

3. Anti-friction material element according to Patent Claim 2, **characterized in that** the anti-fiction material element comprises zinc pyrophosphate.

4. Anti-friction material element according to Patent Claim 1, **characterized in that** it comprises a phosphate from the group of the cyclic and linear polyphosphates and ultraphosphates.

5. Anti-friction material element according to any of Patent Claims 1 to 4, **characterized in that** the form in which the phosphate therein has been bonded into the binder matrix is that of powder with grain sizes in the range from d_{50%} = 30 µm, d_{90%} = 100 µm to d_{50%} = 5 µm, d_{90%} = = 15 µm, together with the other fillers composed entirely or predominantly of carbon in the element.

6. Anti-friction material element according to Patent Claim 1 or 5, **characterized in that** the anti-friction material element comprises, as phosphate, a salt of di- or pyrophosphoric acid.

7. Anti-friction material element according to any of Patent Claims 1 to 6, **characterized in that** the anti-friction material element comprises carbon fillers from the group of synthetic graphite, natural graphite, petroleum coke in graphitized and non-graphitized form, coal tar pitch coke in graphitized and non-graphitized form, carbon black coke in graphitized and non-graphitized form.

8. Anti-friction material element according to any of Patent Claims 1 to 7, **characterized in that** the anti-friction material element comprises, in addition to at least one carbon filler, at least one filler not composed of carbon from the group of silicon dioxide, silicon carbide, aluminium oxide, talc, magnesium oxide.

9. Process for producing an anti-friction material element composed of at least one carbon filler and of at least one synthetic resin binder, **characterized in that** at least one filler composed of carbon and at least one metal phosphate in granular or pulverulent form with grain sizes in the range from d_{50%} = 30 µm, d_{90%} = 100 µm to d_{50%} = 5 µm, d_{90%} = 15 µm are mixed with one another in accordance with prescribed formulation without addition of any binder, then the mixture of dry material is mixed with a synthetic resin binder and then the resultant mixed material is processed by means of a compaction process at from 160 to 200°C to give a moulding, where the binder is selected from the group of phenolic resins, furan resins, epoxy resins, polyphenylene sulphide resins, cyanate ester resins.

10. Process for producing an anti-friction material element according to Patent Claim 9, **characterized in that** when the components are mixed a di- or pyrophosphate is added as metal phosphate.

11. Process for producing an anti-friction material element according to Patent Claim 10, **characterized in that** when the components are mixed, zinc pyrophosphate is added as metal phosphate.

12. Process according to Patent Claim 9, **characterized in that** at least one hydrogenphosphate or one phosphate comprising water of crystallization is added in granular or pulverulent form at a temperature at which the phosphates used are converted into thermally stable phosphates.

13. Process for producing an anti-friction material element according to any of Patent Claims 9 to 12, **characterized in that** the binder is added in pulverulent form.

14. Process for producing an anti-friction material element according to any of Patent Claims 9 to 12, **characterized in that** the binder is added in the form of paste, liquid, solution or slurry.

15. Process for producing an anti-friction material element according to one or more of Patent Claims 9 to 14, **characterized in that** the mixing of the binder with the dry material takes place at a temperature which is above the melting range of the synthetic resin used as binder.

16. Process for producing an anti-friction material element according to one or more of Patent Claims 9 to 15, **characterized in that** the mixed material obtained after the mixing of the solid components and of the resin binder is comminuted and classified prior to the shaping process.

17. Process for producing an anti-friction material element according to one or more of Patent Claims 9 to 16, **characterized in that** the mixed material is processed to give mouldings via hot pressing at temperatures which are above the softening range or the glass transition temperature, and below the decomposition temperature, of the synthetic resin used as binder.

18. Process for producing an anti-friction material element according to one or more of Patent Claims 9 to 16, **characterized in that** the mixed material is processed to give mouldings via injection moulding or transfer moulding.

19. Process for producing an anti-friction material element according to one or more of Patent Claims 9 to 18, **characterized in that** fillers used when the mixture of dry materials is produced comprise at least one filler composed of carbon, at least one filler not composed of carbon and at least one phosphate.

20. Process for producing an anti-friction material element composed of at least one carbon filler and of one synthetic resin binder, **characterized in that** at least one filler composed of carbon, at least one metal phosphate in granular or pulverulent form with grain sizes in the range from d_{50%} = 30 µm, d_{90%} = 100 µm to d_{50%} = 5 µm, d_{90%} = 15 µm and at least one binder from the group of phenolic resins, furan resins, epoxy resins, polyphenylene sulphide resins, cyanate ester resins, where the synthetic resin content is at most 40 percent by weight, are mixed with one another, and then the resultant mixed material is processed by means of shaping equipment at from 160 to 200°C to give a moulding.

21. Process according to Patent Claim 20, **characterized in that** at least one filler composed of carbon, at least one metal phosphate from the group of tripotassium phosphate (K₃PO₄), aluminium phosphate (AlPO₄), sodium pyrophosphate (Na₄P₂O₇) and zinc pyrophosphate (Zn₂P₂O₇) in granular or pulverulent form and at least one binder from the group of phenolic resins, furan resins, epoxy resins, polyphenylene sulphide resins, cyanate ester resins are mixed, and then the resultant mixed material is processed by means of shaping equipment at from 160 to 200°C to give a moulding.

22. Process for producing an anti-friction material element according to Patent Claim 21, **characterized in that** when the components are mixed, zinc pyrophosphate is added as metal phosphate.

23. Process according to Patent Claim 20, **characterized in that** at least one filler composed of carbon, at least one metal phosphate from the group of cyclic and linear polyphosphates and ultraphosphates in granular or pulverulent form and at least one binder from the group of phenolic resins, furan resins, epoxy resins, polyphenylene sulphide resins, cyanate ester resins are mixed with one another, and then the resultant mixed material is processed by means of shaping equipment at from 160 to 200°C to give a moulding.

24. Process for producing an anti-friction material element according to any of Patent Claims 20 to 23, **characterized in that** the binder is added in pulverulent form.

25. Process for producing an anti-friction material element according to any of Patent Claims 20 to 23, **characterized in that** the binder is added in liquid form.

26. Process for producing an anti-friction material element according to one or more of Patent Claims 20 to 25, **characterized in that** the mixed material obtained after the mixing of the solid components and of the resin binder is comminuted and classified prior to the shaping process.

27. Process for producing an anti-friction material element according to one or more of Patent Claims 20 to 26, **characterized in that** the mixed material is processed to give mouldings via hot pressing at temperatures which are above the softening range or the glass transition temperature, and below the decomposition temperature, of the synthetic resin used as binder.

28. Process for producing an anti-friction material element according to one or more of Patent Claims 20 to 27, **characterized in that** the mixed material is processed to give mouldings via injection moulding or transfer moulding.

## Revendications

1. Corps en matériau de glissement composé d'au moins une charge carbonée et d'un liant en résine synthétique, **caractérisé en ce qu'**il contient un phosphate et la proportion de résine synthétique est d'au maximum 40% en poids, le corps de glissement contenant un liant du groupe formé par les résines phénoliques, les résines de furanne, les résines époxyde, les résines de poly(sulfure de phénylène), les résines cyanate-ester.

2. Corps en matériau de glissement selon la revendication 1, **caractérisé en ce qu'**il contient un phosphate du groupe formé par le phosphate tripotassique (K₃PO₄), le phosphate d'aluminium (AlPO₄), le pyrophosphate de sodium (Na₄P₂O₇) et le pyrophosphate de zinc (Zn₂P₂O₇).

3. Corps en matériau de glissement selon la revendication 2, **caractérisé en ce que** le corps en matériau de glissement contient du pyrophosphate de zinc.

4. Corps en matériau de glissement selon la revendication 1, **caractérisé en ce qu'**il contient un phosphate du groupe formé par les polyphosphates et les ultraphosphates annulaires et linéaires.

5. Corps en matériau de glissement selon l'une quelconque des revendications 1 à 4, caractérisé en ce le phosphate est intégré dans ce corps sous forme de poudre présentant des grosseurs dans la plage de d_{50%} = 30 µm, d_{90%} = 100 µm à d_{50%} = 5 µm, d_{90%} = 15 µm, ensemble avec les autres charges du corps, totalement ou principalement composées de carbone dans la matrice de liant.

6. Corps en matériau de glissement selon la revendication 1 ou 5, **caractérisé en ce que** le corps en matériau de glissement contient, comme phosphate, un sel de l'acide diphosphorique ou pyrophosphorique.

7. Corps en matériau de glissement selon l'une quelconque des revendications 1 à 6, **caractérisé en ce que** le corps en matériau de glissement contient des charges carbonées du groupe formé par le graphite préparé synthétiquement, le graphite naturel, le coke de pétrole sous forme graphitée et non graphitée, le coke de brai de goudron de houille sous forme graphitée et non graphitée, le coke de suie sous forme graphitée et non graphitée.

8. Corps en matériau de glissement selon l'une quelconque des revendications 1 à 7, **caractérisé en ce que** le corps en matériau de glissement contient, en plus d'au moins une charge carbonée, au moins une charge qui n'est pas composée de carbone, du groupe formé par le dioxyde de silicium, le carbure de silicium, l'oxyde d'aluminium, le talc, l'oxyde de magnésium.

9. Procédé pour la fabrication d'un corps en matériau de glissement composé d'au moins une charge carbonée et d'au moins un liant en résine synthétique, **caractérisé en ce qu'**au moins une charge composée de carbone et au moins un phosphate métallique sous forme de grains ou de poudre présentant des grosseurs dans la plage de d_{50%} = 30 µm, d_{90%} = 100 µm à d_{50%} = 5 µm, d_{90%} = 15 µm sont mélangés selon une formulation prédéfinie, sans addition de liant, puis le mélange de produits secs est mélangé avec un liant en résine synthétique et le produit mélangé ainsi obtenu est transformé par un procédé de compactage à 160 jusqu'à 200°C en un corps façonné, le liant étant choisi dans le groupe des résines phénoliques, des résines de furanne, des résines époxyde, des résines de poly(sulfure de phénylène, des résines cyanate-ester.

10. Procédé pour la fabrication d'un corps en matériau de glissement selon la revendication 9, **caractérisé en ce qu'**un diphosphate ou un pyrophosphate est ajouté en tant que phosphate métallique lors du mélange des composants.

11. Procédé pour la fabrication d'un corps en matériau de glissement selon la revendication 10, **caractérisé en ce que** du pyrophosphate de zinc est ajouté en tant que phosphate métallique lors du mélange des composants.

12. Procédé selon la revendication 9, **caractérisé en ce qu'**on ajoute au moins un hydrogénophosphate ou un phosphate contenant de l'eau de cristallisation sous forme de grains ou de poudre à une température à laquelle les phosphates utilisés sont transformés en phosphates thermiquement stables.

13. Procédé pour la fabrication d'un corps en matériau de glissement selon l'une quelconque des revendications 9 à 12, **caractérisé en ce que** le liant est ajouté sous forme de poudre.

14. Procédé pour la fabrication d'un corps en matériau de glissement selon l'une quelconque des revendications 9 à 12, **caractérisé en ce que** le liant est ajouté sous forme pâteuse, liquide, dissoute ou en suspension.

15. Procédé pour la fabrication d'un corps en matériau de glissement selon l'une ou plusieurs des revendications 9 à 14, **caractérisé en ce que** le mélange du liant avec le produit sec a lieu à une température qui est supérieure à la plage de fusion de la résine synthétique utilisée comme liant.

16. Procédé pour la fabrication d'un corps en matériau de glissement selon l'une ou plusieurs des revendications 9 à 15, **caractérisé en ce que** le produit mélangé obtenu après le mélange des composants solides et du liant en résine est broyé et classé avant le façonnage.

17. Procédé pour la fabrication d'un corps en matériau de glissement selon l'une ou plusieurs des revendications 9 à 16, **caractérisé en ce que** le produit mélangé est transformé par pressage à chaud en corps façonnés à des températures qui sont supérieures à la plage de ramollissement ou, selon le cas, à la température de transition vitreuse et inférieures à la température de décomposition de la résine synthétique utilisée comme liant.

18. Procédé pour la fabrication d'un corps en matériau de glissement selon l'une ou plusieurs des revendications 9 à 16, **caractérisé en ce que** le produit mélangé est transformé en corps façonnés par moulage par injection ou par transfert.

19. Procédé pour la fabrication d'un corps en matériau de glissement selon l'une ou plusieurs des revendications 9 à 18, **caractérisé en ce qu'**on utilise comme charges lors de la préparation du mélange de produits secs au moins une charge composée de carbone, au moins une charge qui n'est pas composée de carbone et au moins un phosphate.

20. Procédé pour la fabrication d'un corps en matériau de glissement composé d'au moins une charge carbonée et d'un liant en résine synthétique, **caractérisé en ce qu'**au moins une charge composée de carbone, au moins un phosphate métallique sous forme de grains ou de poudre présentant des grosseurs dans la plage de d_{50%} = 30 µm, d_{90%} = 100 µm à d_{50%} = 5 µm, d_{90%} = 15 µm et au moins un liant du groupe formé par les résines phénoliques, les résines de furanne, les résines époxyde, les résines de poly(sulfure de phénylène), les résines cyanate-ester sont mélangés les uns avec les autres, la proportion de résine synthétique étant d'au maximum 40% en poids, puis le produit mélangé ainsi obtenu est transformé au moyen d'un dispositif de façonnage à 160 jusqu'à 200°C en un corps façonné.

21. Procédé selon la revendication 20, **caractérisé en ce qu'**au moins une charge composée de carbone, au moins un phosphate métallique du groupe formé par le phosphate tripotassique, (K₃PO₄) , le phosphate d'aluminium (AlPO₄), le pyrophosphate de sodium (Na₄P₂O₇) et le pyrophosphate de zinc (Zn₂P₂O₇) sous forme de grains ou de poudre et au moins un liant du groupe formé par résines phénoliques, les résines de furanne, les résines époxyde, les résines de poly(sulfure de phénylène), les résines cyanate-ester sont mélangés et le produit mélangé ainsi obtenu est transformé au moyen d'un dispositif de façonnage à 160 jusqu'à 200°C en un corps façonné.

22. Procédé pour la fabrication d'un corps en matériau de glissement selon la revendication 21, **caractérisé en ce que** du pyrophosphate de zinc est ajouté en tant que phosphate métallique lors du mélange des composants.

23. Procédé selon la revendication 20, **caractérisé en ce qu'**au moins une charge composée de carbone, au moins un phosphate métallique du groupe formé par les polyphosphates et les ultraphosphates annulaires et linéaires sous forme de grains ou de poudre et au moins un liant du groupe formé par résines phénoliques, les résines de furanne, les résines époxyde, les résines de poly(sulfure de phénylène), les résines cyanate-ester sont mélangés les uns avec les autres et le produit mélangé ainsi obtenu est transformé au moyen d'un dispositif de façonnage à 160 jusqu'à 200°C en un corps façonné.

24. Procédé pour la fabrication d'un corps en matériau de glissement selon l'une quelconque des revendications 20 à 23, **caractérisé en ce que** le liant est ajouté sous forme de poudre.

25. Procédé pour la fabrication d'un corps en matériau de glissement selon l'une quelconque des revendications 20 à 23, **caractérisé en ce que** le liant est ajouté sous forme liquide.

26. Procédé pour la fabrication d'un corps en matériau de glissement selon l'une ou plusieurs des revendications 20 à 25, **caractérisé en ce que** le produit mélangé obtenu après le mélange des composants solides et du liant en résine est broyé et classé avant le façonnage.

27. Procédé pour la fabrication d'un corps en matériau de glissement selon l'une ou plusieurs des revendications 20 à 26, **caractérisé en ce que** le produit mélangé est transformé par pressage à chaud en corps façonnés à des températures qui sont supérieures à la plage de ramollissement ou, selon le cas, à la température de transition vitreuse et inférieures à la température de décomposition de la résine synthétique utilisée comme liant.

28. Procédé pour la fabrication d'un corps en matériau de glissement selon l'une ou plusieurs des revendications 20 à 27, **caractérisé en ce que** le produit mélangé est transformé en corps façonnés par moulage par injection ou par transfert.
